**Europäisches Patentamt**

**European Patent Office**

**Office européen des brevets**

(19)

(11) Veröffentlichungsnummer : **0 338 342 B1**

# EUROPÄISCHE PATENTSCHRIFT

(12)

(45) Veröffentlichungstag der Patentschrift :
29.07.92 Patentblatt 92/31

(51) Int. Cl.⁵ : **H02B 1/26, H02B 1/01**

(21) Anmeldenummer : **89106114.5**

(22) Anmeldetag : **07.04.89**

(54) **Befestigungselement zum Verbinden einer Montageschiene mit einer Wand eines Schaltschrankes.**

(30) Priorität : **19.04.88 DE 3812939**

(43) Veröffentlichungstag der Anmeldung :
**25.10.89 Patentblatt 89/43**

(45) Bekanntmachung des Hinweises auf die
Patenterteilung :
**29.07.92 Patentblatt 92/31**

(84) Benannte Vertragsstaaten :
**AT BE CH DE ES FR GB GR IT LI LU NL SE**

(56) Entgegenhaltungen :
**DE-A- 3 614 034**
**FR-A- 1 386 323**
**FR-A- 2 562 176**

(73) Patentinhaber : **Rittal-Werk Rudolf Loh GmbH & Co. KG**
**Auf dem Stützelberg**
**W-6348 Herborn (DE)**

(72) Erfinder : **Zachrei, Jürgen**
**Am Hungersberg 2**
**W-6340 Dillenburg-Nanzenbach (DE)**

(74) Vertreter : **Vogel, Georg**
**Pat.-Ing. Georg Vogel Hermann-Essig-Strasse 35**
**W-7141 Schwieberdingen (DE)**

## Beschreibung

Die Erfindung betrifft ein Befestigungselement zum Verbinden einer Montageschiene mit einer Wand eines Schaltschrankes.

Die meist als Voll- oder Teil-Hohlprofilabschnitte ausgebildeten Montageschienen werden vielfach direkt mit der Wand des Schaltschrankes verschraubt. Dies bereitet dann keine Schwierigkeiten, wenn die Montageschiene parallel zu der Wand ausgerichtet ist und direkt oder über Abstandselemente mit der Wand verschraubt wird. Es müssen jedoch immer mehr Montageschienen auch mit den Stirnseiten auf die Wände stoßend befestigt werden.

Aus der DE-A-3614034 ist ein Verbindungselement für einen gestellrahmen beschrieben.

Es ist Aufgabe der Erfindung, ein Befestigungselement zu schaffen, mit dem Montageschienen mit den Stirnseiten auf die Wand des Schaltschrankes stoßend schnell und einfach befestigt werden können.

Diese Aufgabe wird nach der Erfindung dadurch gelöst, daß an eine Stirnseite eines im Querschnitt an den von der Montageschiene umschlossenen Hohlraum angepaßten und in die Montageschiene einschiebbaren Halteblocks eine Anschlagplatte angeformt ist, daß die Anschlagplatte die Stirnseite der Montageschiene überdeckt und mit deren Außenkontur bündig abschließt, und daß zumindest die Stirnseite des Halteblockes mit der Anschlagplatte mit einer Befestigungsbohrung und einem die Befestigungsbohrung umgebenden Dichtungssteg versehen ist.

Das Befestigungselement braucht nur in den Hohlraum der Montageschiene eingeschoben zu werden, wobei der Halteblock die Montageschiene spielfrei festhält. Die Anschlagplatte begrenzt die Einsteckbewegung des Befestigungselementes und mit dem Dichtungssteg um die Befestigungsbohrung wird die Bohrung in der Wand des Schaltschrankes ringsum abgedichtet, sobald die Befestigungsschraube die Anschlagplatte mit dem Dichtungssteg gegen die Wand des Schaltschrankes zieht und verspannt.

Die Befestigungsbohrung im Befestigungselement läßt sich nach einer Ausgestaltung dadurch auf beiden Seiten zum Einschrauben von Befestigungsschrauben ausnützen, wenn vorgesehen ist, daß die Befestigungsbohrung als Durchgangsbohrung ausgebildet ist, die sich in Richtung zur Stirnseite ohne Anschlagplatte des Halteblockes leicht konisch verjüngt. Die konische Verjüngung dient der besseren Entformung, wenn das Befestigungselement als Spritzgußteil hergestellt wird.

Die der Anschlagplatte abgekehrte Stirnseite des Befestigungselementes läßt sich dann zur unverdrehbaren Festlegung von Teilen anderer Art ausnützen, wenn vorgesehen ist, daß die der Anschlagplatte abgekehrte Stirnseite des Halteblockes mit zusätzlichen Befestigungsbohrungen versehen ist, die vorzugsweise als Sacklochbohrungen ausgebildet sind. Die Anschlagplatte mit dem Dichtungssteg sorgt dabei wiederum für die Abdichtung der Bohrung in der Wand des Schaltschrankes.

Nach einer bevorzugten Ausgestaltung ist vorgesehen, daß bei einer C-förmigen Montageschiene mit gegeneinander gerichteten Endschenkeln der Halteblock auf einer Breitseite eine leistenartige Verdickung trägt, die den Einführungsschlitz zwischen den gegeneinander gerichteten Endschenkeln der Montageschiene ausfüllt. Die Verwendung derartiger Montageschienen hat den Vorteil, daß an beliebiger Stelle der Montageschiene zusätzliche Schiebemuttern eingesetzt werden können, an denen weitere Teile befestigt werden können. Auch an den Befestigungselementen, die die Montageschiene an den Wänden des Schaltschrankes trägt, lassen sich zusätzliche Teile befestigen, wenn vorgesehen ist, daß in die Verdickung mindestens eine Befestigungsbohrung eingebracht ist, die vorzugsweise als Sacklochbohrung ausgebildet ist.

Für die Abdichtung der Bohrung in der Wand des Schaltschrankes, die die Befestigungsschraube aufnimmt, kann nach Ausgestaltungen vorgesehen sein, daß der Dichtungssteg im Abstand von den Seitenkanten der Anschlagplatte umlaufend ausgebildet ist, oder daß der Dichtungssteg im Abstand um die Befestigungsbohrung umlaufend ausgebildet ist, wobei im letzteren Fall der Dichtungssteg leichter zu verformen ist.

Das Befestigungselement wird nach einer bevorzugten Ausgestaltung als Kunststoff-Spritzgußteil ausgebildet und hergestellt.

Die Erfindung wird anhand eines in der Zeichnung dargestellten Ausführungsbeispiels näher erläutert. Es zeigt:

Fig. 1 einen Ausschnitt aus einem boxartigen Schrankkorpus mit einer C-förmigen Montageschiene und

Fig. 2 das stirnseitige Ende der Montageschiene mit dem Befestigungselement in Explosionsdarstellung.

Von dem boxartigen Schrankkorpus ist ein Teil der Seitenwand 10 und ein Teil der Rückwand 11 gezeigt. Die offene Seite des Schrankkorpus weist den Schließrand 12 auf, der rechtwinklig nach innen gebogen ist und in den senkrecht nach oben gerichteten Schließsteg 13 mit nach außen gerichtetem Anlageflansch 14 übergeht. Im Bereich der Seitenwand 10 wird ein C-förmiger Profilabschnitt, auch als Halfenschienen-Abschnitt bezeichnet, als Montageschiene 20 befestigt. Dabei sind die einander zugekehrten Endschenkel 23 und 25, die sich an die Seitenschenkel 22 und 24 anschließen, gegeneinander gerichtet und stehen im Abstand zueinander, so daß ein durchgehender Einführungsschlitz 29 gebildet ist, der dem Innenraum des Schrankkorpus zuge-

EP 0 338 342 B1

kehrt ist. Die Montageschiene 20 stellt einen Teil-Hohlprofilabschnitt mit einem Hohlraum 26 dar. In die beiden Enden der Montageschiene 20 werden Befestigungselemente 30 von den Stirnseiten her eingesteckt. Die Befestigungselemente 30 tragen Halteblöcke 31, die im Querschnitt an den Querschnitt des Hohlraumes 26 der Montageschiene 20 angepaßt sind. Die der Rückwand 11 und dem Schließrand 12 des Schrankkorpus zugekehrten Stirnseiten der Befestigungselemente 30 sind mit Anschlagplatten 36 abgeschlossen, die die Stirnseiten der Montageschiene 20 überdecken und mit deren Außenkontur bündig abschließen.

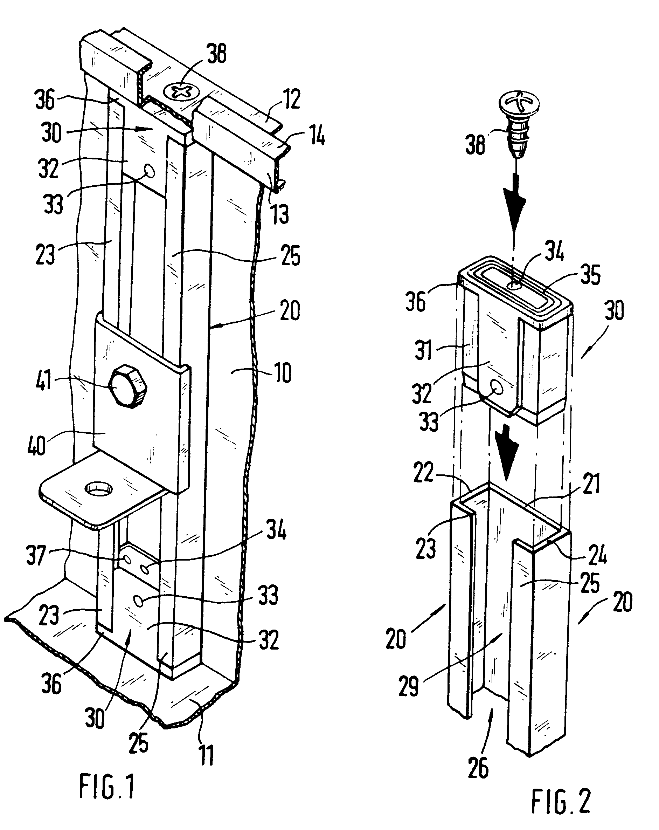

Wie Fig. 2 zeigt, ist in die Stirnseite des Befestigungselementes 30 mit der Anschlagplatte 36 die Befestigungsbohrung 34 eingebracht, die als Sacklochbohrung oder als durchgehende Bohrung ausgebildet sein kann. Bei einer durchgehenden Befestigungsbohrung 34 verjüngt sich die Befestigungsbohrung 34 leicht konisch und zwar ausgehend von der Anschlagplatte 36. Um die Befestigungsbohrung 34 verläuft auf der Anschlagplatte 36 der umlaufende Dichtungssteg 35, der im Abstand den Kanten der Anschlagplatte 36 folgt oder nur die Befestigungsbohrung 34 kreisförmig umschließt.

Ist das Befestigungselement 30 in die Stirnseite der Montageschiene 20 eingesetzt, dann begrenzt die Anschlagplatte 36 die Einsteckbewegung. Die Endschenkel 23 und 25, die Seitenschenkel 22 und 24 sowie der Grundschenkel 21 der Montageschiene 20 umschließen den Halteblock 31 des Befestigungselementes 30 spielfrei und die leistenartige Verdickung 32 füllt den Einführungsschlitz 29 der Montageschiene 20 bündig aus. Die Befestigungsschrauben 38 werden durch Bohrungen im Schließrand 12 und in der Rückwand 11 hindurch in die Befestigungsbohrungen 34 der Befestigungselemente 30 eingeschraubt. Dabei werden die Anschlagplatten 36 gegen den Schließrand 12 und die Rückwand 11 gezogen und verspannt, so daß sich die Dichtungsstege 35 der Anschlagplatten 36 verformen und die Bohrungen im Schließrand 12 und der Rückwand 11 zum Innenraum des Schrankkorpus hin eindeutig abdichten.

Der Einführungsschlitz 29 erlaubt in bekannter Weise das Einbringen von Schiebemuttern an beliebiger Stelle und deren unverlierbare Festlegung, so daß auch weitere Befestigungsteile, wie z.B. der Befestigungswinkel 40, an der Montageschiene 20 festgeschraubt werden können, wie die Schraube 41 zeigt.

Die der Anschlagplatte 36 abgekehrte Stirnseite des Befestigungselementes 30 kann weitere Befestigungsbohrungen 37 tragen, so daß bei der Verwendung des Befestigungselementes 30 ohne die Montageschiene 20 weitere Bauteile an dieser Stirnseite des Befestigungselementes 30 unverdrehbar befestigt werden können.

**Patentansprüche**

1. Befestigungselement zum Verbinden einer Montageschiene (20) mit einer Wand (10-12) eines Schaltschrankes,
dadurch gekennzeichnet,
daß an eine Stirnseite eines im Querschnitt an den von der Montageschiene (20) umschlossenen Hohlraum (26) angepaßten und in die Montageschiene (20) einschiebbaren Halteblocks (31) eine Anschlagplatte (36) angeformt ist,
daß die Anschlagplatte (36) die Stirnseite der Montageschiene (20) überdeckt und mit deren Außenkontur bündig abschließt, und
daß zumindest die Stirnseite des Halteblockes (31) mit der Anschlagplatte (36) mit einer Befestigungsbohrung (34) und einem die Befestigungsbohrung (34) umgebenden Dichtungssteg (35) versehen ist.

2. Befestigungselement nach Anspruch 1,
dadurch gekennzeichnet,
daß die Befestigungsbohrung (34) als Durchgangsbohrung ausgebildet ist, die sich in Richtung zur Stirnseite ohne Anschlagplatte (36) des Halteblockes (31) leicht konisch verjüngt.

3. Befestigungselement nach Anspruch 1 oder 2,
dadurch gekennzeichnet,
daß die der Anschlagplatte (36) abgekehrte Stirnseite des Halteblockes (31) mit zusätzlichen Befestigungsbohrungen (37) versehen ist, die vorzugsweise als Sacklochbohrungen ausgebildet sind.

4. Befestigungselement nacheinem der Ansprüche 1 bis 3,
dadurch gekennzeichnet,
daß bei einer C-förmigen Montageschiene (20) mit gegeneinander gerichteten Endschenkeln (23,25) der Halteblock (31) auf einer Breitseite eine leistenartige Verdickung (32) trägt, die den Einführungsschlitz (29) zwischen den gegeneinander gerichteten Endschenkeln (23,25) der Montageschiebe (20) ausfüllt.

5. Befestigungselement nach einem der Ansprüche 1 bis 4,
dadurch gekennzeichnet,
daß es als Kunststoff-Spritzgußteil ausgebildet und hergestellt ist.

3

6. Befestigungselement nach Anspruch 4,
dadurch gekennzeichnet,
daß in die Verdickung (32) mindestens eine Befestigungsbohrung (31) eingebracht ist, die vorzugsweise als Sacklochbohrung ausgebildet ist.

7. Befestigungselement nach einem der Ansprüche 1 bis 6,
dadurch gekennzeichnet,
daß der Dichtungssteg (35) im Abstand von den Seitenkanten der Anschlagplatte (36) umlaufend ausgebildet ist.

8. Befestigungselement nach einem der Ansprüche 1 bis 6,
dadurch gekennzeichnet,
daß der Dichtungssteg im Abstand um die Befestigungsbohrung (34) umlaufend ausgebildet ist.


**Claims**

1. Fixing element for connecting an assembly rail (20) to a wall (10-12) of a switchgear cabinet,
characterised in that
a stop plate (36) is moulded onto an end face of a retaining block (31), which has a cross-section adapted to the cavity surrounded by the assembly rail (20) and is insertable into the assembly rail (20),
in that the stop plate (36) covers the end face of the assembly rail (20) and terminates said face flush with its external configuration, and
in that at least the end face of the retaining block (31) having the stop plate (36) is provided with a fixing bore (34) and a sealing web (35), which surrounds the fixing bore (34).

2. Fixing element according to claim 1,
characterised in that
the fixing bore (34) is a through-bore, which tapers in a slightly conical manner towards the end face of the retaining block (31) not having the stop plate (36).

3. Fixing element according to claim 1 or 2,
characterised in that
the end face of the retaining block (31) remote from the stop plate (36) is provided with additional fixing bores (37), which are preferably blind-end bores.

4. Fixing element according to one of claims 1 to 3,
characterised in that,
when an assembly rail (20) is C-shaped and has end flanges (23, 25) orientated towards one another, the retaining block (31) is provided, along one width, with a bar-like thickened portion (32), which fills the insert slot (29) between the end flanges (23, 25) of the assembly rail (20) which are orientated towards one another.

5. Fixing element according to one of claims 1 to 4,
characterised in that
it is configured and produced as a plastics material injection moulded component part.

6. Fixing element according to claim 4,
characterised in that
at least one fixing bore (33) is introduced into the thickened portion (32) and is preferably a blind-end bore.

7. Fixing element according to one of claims 1 to 6,
characterised in that
the sealing web (35) is circumferentially provided at a spacing from the lateral edges of the stop plate (36).

8. Fixing element according to one of claims 1 to 6,
characterised in that
the sealing web is circumferentially provided at a spacing from and around the fixing bore (34).


**Revendications**

1. Elément de fixation pour solidariser un rail de montage (20) à une paroi (10-12) d'une armoire de commutation,
caractérisé en ce que
sur une face frontale d'un bloc de support (31) dont la section transversale est adaptée çà la cavité (26) enveloppée par le rail de montage (20), bloc de support qui peut être introduit par glissement dans le rail de montage (20) est formée une plaque de butée (36),

en ce que la plaque de butée (36) recouvre la face frontale du rail de montage (20), et se termine au niveau du contour extérieur de ce rail de montage, et

en ce qu'au moins la face frontale du bloc de support (31) avec la plaque de butée (36) présente une forure de fixation (34) et est dotée d'un joint d'étanchéité (35) entourant la forure de fixation.

2. Elément de fixation suivant la revendication 1,
caractérisé en ce que
la forure de fixation a la forme d'une forure de passage, dont le diamètre diminue légèrement en cône en direction de la face frontale sans plaque de butée (36) du bloc de support (31).

3. Elément de fixation suivant l'une ou l'autre des revendications 1 et 2,
caractérisé en ce que
la face frontale du bloc de support (31) qui n'est pas orientée vers la plaque de butée (36) présente des forures de fixation (37) supplémentaires, ayant de préférence la forme de forures à fond plein.

4. Elément de fixation suivant l'une quelconque des revendications de 1 à 3,
caractérisé en ce que
dans le cas d'un rail de montage en forme de C (20) avec des ailes terminales dirigées l'une vers l'autre (23, 25), le bloc de support (31) porte sur un grand côté un épaississement en forme de latte (32), qui occupe la fente d'introduction (29) entre les ailes terminales dirigées l'une vers l'autre (23, 25) du rail de montage (20).

5. Elément de fixation suivant l'une quelconque des revendications de 1 à 4,
caractérisé en ce qu'
il a la forme d'une pièce moulée en matière plastique et est fabriqué par moulage ou extrusion.

6. Elément de fixation suivant la revendication 4,
caractérisé en ce que
dans l'épaississement (32) est pratiqué au moins une forure de fixation (33), ayant de préférence la forme d'une forure à fond plein.

7. Elément de fixation suivant l'une quelconque des revendications de 1 à 6,
caractérisé en ce que
le joint d'étanchéité (35) est disposé sur le pourtour à distance des arêtes latérales de la plaque de butée (36).

8. Elément de fixation suivant l'une quelconque des revendications de 1 à 6,
caractérisé en ce que
le joint d'étanchéité est disposé sur le pourtour à distance autour de la forure de fixation (34).

FIG.1

FIG.2